(19) 

Europäisches
Patentamt
European
Patent Office
Office européen
des brevets

(11) **EP 4 657 238 A1**

(12) **EUROPEAN PATENT APPLICATION**

(43) Date of publication:
**03.12.2025 Bulletin 2025/49**

(21) Application number: **24178765.4**

(22) Date of filing: **29.05.2024**

(51) International Patent Classification (IPC):
*G06F 7/556* $^{(2006.01)}$

(52) Cooperative Patent Classification (CPC):
**G06F 7/556; G06N 3/063;** G06N 3/048

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Robert Bosch GmbH
70442 Stuttgart (DE)**

(72) Inventors:
• **De La Parra Aparicio, Cecilia Eugenia
71083 Herrenberg (DE)**
• **Rai, Shubham
71263 Weil Der Stadt (DE)**

Remarks:
Amended claims in accordance with Rule 137(2)
EPC.

(54) **FAST AND RESOURCE-EFFICIENT APPROXIMATION FOR THE EXPONENTIAL FUNCTION**

(57) A method (100) for computing an approximate value $A$ of the exponential function $e^x$ of an argument $x$, comprising the steps of:
• approximating (110) $e^x$ with a Taylor expansion $T$ around $x = 0$ that comprises a predetermined number $n$ of terms with i-th powers $x^i$ of the argument $x$ divided by the respective factorial of $i$, with $i = 1, ..., n$; and
• in the computation of each term, approximating (140) the factorial of i to the nearest power of 2, $p(i!)$.

Fig. 1

**Description**

The invention relates to the computation of the exponential function in a manner that can be performed more efficiently on a computing platform, thereby saving processing time and allowing to downsize the computing platform.

Background

When evaluating the output of a neuron in a neural network, inputs to this particular neuron are aggregated in a weighted sum, and the result is processed to the final output by means of a nonlinear activation function. A very common activation function is the softmax function. In particular, this activation function is placed in layers where normalized probabilities are required.

Calling the softmax function very frequently comes at the price that this function is computationally expensive. The main reason for the computational complexity is the computation of the exponential function $e^x$. This requires significant floating-point operations or large lookup tables.

It is known to approximate $e^x$ by a Taylor series around $x = 0$ of the form

$$e^x \approx 1 + \frac{x}{1!} + \frac{x^2}{2!} + \frac{x^3}{3!} + \cdots + \frac{x^n}{n!}.$$

However, this still involves computation of a power of $x$, computation of a factorial, and a division.

Disclosure of the invention

The invention provides a method for computing an approximate value $A$ of the exponential function $e^x$ of an argument $x$. This method builds upon the known approximation of $e^x$ with a Taylor expansion $T$ around $x = 0$ that comprises a predetermined number $n$ of terms with $i$-th powers $x^i$ of the argument $x$ divided by the respective factorial of $i$, with $i = 1, ..., n$, such that

$$e^x \approx 1 + \sum_{i=1}^{n} \frac{x^i}{i!}.$$

In the computation of each term, the factorial of $i$ is approximated by the nearest power of 2, $p(i!)$. That is, 2!=2 is already a power of 2, 3!=6 is approximated as either 4 or 8, 4!=24 is approximated as either 16 or 32, and 5!=120 is approximated as 128.

It was found that the "next power of 2" approximation brings about a surprisingly large savings in complexity because it saves the expensive hardware implementation of division. Rather, a multiplication or division by a power of 2 may be implemented by a simple bit-shift operation that is one of the most basic computing operations on many hardware architectures and therefore very fast and with small hardware blocks in the hardware architecture. That is, the hardware platform need not even be equipped with larger circuitry that is capable of computing the division. This circuitry can be saved, which means that the complete circuitry that is necessary to compute the output $O$ of the neural network fits into a smaller area on the chip. At the same time, this reduces power consumption, and in particular leakage energy. Of course, the approximation to the nearest power of 2 will cause some error. But it has been found that, surprisingly, this causes only a small error in the desired end result, namely the final output $O$ of the neural network. That is, in a neural network where many exponentials are computed and many approximation errors are made, their effects on the final result at least partially cancel each other out.

In a further particularly advantageous embodiment, the argument $x$ is decomposed into a product of an integer $X_q$ and a non-integer scaling factor $\Delta_x$. This scaling factor $\Delta_x$ is expressed as a power of 2 with an exponent of $\Delta_x^*$, so that $\Delta_x = 2^{\Delta_x^*}$. In this manner, the computation of the power $x^i$ of $x$ is reduced to a computation of an integer power $X_q^i$ of the integer $X_q$ and multiplication with a power of 2. Again, this multiplication may then be implemented by a suitable bit-shift operation. Since the exponent $\Delta_x^*$ is non-integer, some approximation error will be made by discretizing to a bit-shift that corresponds to multiplication of an integer power of 2. But this discretization is similar to the "nearest power of 2" approximation of the factorial in the denominator of each term. This means that the final output $O$ of the neural network will tolerate these approximation errors similarly well. The only hard work that remains is the computation of $X_q^i$. But the hardware implementation of computing integer powers of integers requires much smaller structures than the hardware implementation of computing powers of floating-point values.

In a further particularly advantageous embodiment, the sought approximation of $e^x = e^{\Delta x X_q}$ is decomposed into a product of $2^{n \cdot \Delta_x^*}$ and a remaining part $f$. The expression $2^{n \cdot \Delta_x^*}$ appears at the end of the computation of the approximation of $e^x$. Depending on what is further done with the obtained result, there is the possibility that this expression also appears on the other side of a fraction where $e^x$ is computed, and cancels out with this.

For example, the computed approximate value $A$ of $e^x$ may be used in the computation of the softmax function

$$S(y_k) = \frac{\exp(y_k)}{\sum_{l=1}^{m} \exp(y_l)}$$

of an element $y_k$ of an input vector $y$ with $m$ elements. This softmax function normalizes the $m$ components so that they are all between 0 and 1, and they all add up to 1. Here, if the computation of $e^x$ is decomposed into $2^{n \cdot \Delta_x^*} \cdot f$ as presented above, the term $2^{n \cdot \Delta_x^*}$ will appear both in the numerator and in the denominator of the expression for $S(y_k)$. In the denominator, this can be pulled out of the sum, so the two instances of $2^{n \cdot \Delta_x^*}$ in the numerator and in the denominator cancel each other out. This means that, in a further advantageous embodiment, their computation can be omitted altogether.

Consider an example with $n = 3$. Here, the approximate value $A$ is given by

$$A = 1 + \frac{\Delta_x X_q}{p(1!)} + \frac{\left(\Delta_x X_q\right)^2}{p(2!)} + \frac{\left(\Delta_x X_q\right)^3}{p(3!)}.$$

Expressing $\Delta_x$ as a power of 2 and at the same time approximating the denominator to the nearest power or 2 yields

$$A = 1 + \frac{2^{\Delta_x^*} X_q}{2^0} + \frac{2^{2\Delta_x^*} X_q^2}{2^1} + \frac{2^{3\Delta_x^*} X_q^3}{2^3}.$$

Here, the term $2^{n \cdot \Delta_x^*} = 2^{3\Delta_x^*}$ may be pulled to the front to yield

$$A = 2^{3\Delta_x^*} \cdot \left( \frac{1}{2^{3\Delta_x^*}} + \frac{X_q}{2^{2\Delta_x^*}} + \frac{X_q^2}{2^{2\Delta_x^*+1}} + \frac{X_q^3}{2^3} \right).$$

That is,

$$A = 2^{3\Delta_x^*} \cdot f, f\left(\Delta_x X_q\right) = \left( \frac{1}{2^{3\Delta_x^*}} + \frac{X_q}{2^{2\Delta_x^*}} + \frac{X_q^2}{2^{2\Delta_x^*+1}} + \frac{X_q^3}{2^3} \right).$$

Plugging this into the expression for $S(y_k)$ yields

$$S(y_k) = \frac{2^{3\Delta_x^*} \cdot f\left(\Delta_x X_q\right)}{\sum_{l=1}^{m} 2^{3\Delta_x^*} \cdot f\left(\Delta_x X_q\right)_l} = \frac{2^{3\Delta_x^*} \cdot f\left(\Delta_x X_q\right)}{2^{3\Delta_x^*} \cdot \sum_{l=1}^{m} f\left(\Delta_x X_q\right)_l}.$$

Herein, the two instances of $2^{3\Delta_x^*}$ in the numerator and in the denominator cancel each other out, so their computation may be omitted altogether.

As discussed before, in a further advantageous embodiment, at least one multiplication of one number with a power of 2 to an exponent, and/or division of said number by said power of 2, is computed by bit-shifting the number for a number of bits corresponding to the exponent. This saves the need for more complex circuitry that would otherwise be required for performing the multiplication or division.

As discussed before, a major use case for the approximation of $e^x$ presented here is using the computed approximate value $A$ of $e^x$, and/or the computed value $S(y_k)$ of the softmax function, in the computation of the output $O$ of a neural network. In particular, when evaluating such an output $O$ of a neural network, the approximation of $e^x$ is needed very many times. Therefore, the savings in processing time that are introduced by the simplifications brought about by the approximation add up to a substantial amount. Moreover, the need for particular structures to perform more complex computing operations is eliminated. This means that the hardware platform may be downsized in terms of area on the chip that it needs. This is particularly advantageous for applications in embedded systems, such as autonomous driving systems for vehicles or robots, production machines, or quality inspection machines. In these systems, the embedded systems on which the neural network is run are frequently under strict size and power constraints.

In a further particularly advantageous embodiment, the computed approximate value $A$ of $e^x$, and/or the computed value $S(y_k)$ of the softmax function, is used to compute the output $O$ of a classifier network for images or other records of measurement data, and/or the output $O$ of a multi-head attention module of a transformer network. These network architectures have shown to be particularly resilient against the approximation errors introduced by the approximation proposed here. That is, the approximation errors are unlikely to influence the final output $O$ of the neural network. In particular, in a classification network, the approximation errors are unlikely to switch the class for which the highest classification score is obtained to another class. At the same time, these architectures make particularly heavy use of the exponential function, so the overall savings in processing time are more pronounced.

In many applications of neural networks, not all inputs are equally difficult to process. In particular, in applications involving classification tasks, for some inputs, it is clear very quickly what the final decision will be, whereas, for other inputs, the final decision is not apparent until all layers have been processed. This means that, for differently difficult inputs, the resilience of the final output $O$ against approximation errors introduced by the approximation of $e^x$ may be different as well. For less difficult inputs, the power series may be shortened, i.e., a lesser number $n$ of terms may be used. The saved time may then be used on more difficult inputs that may need a more exact approximation of $e^x$ with a higher $n$. How difficult a particular input is may, for example, be determined from confidences $C$ of outputs $O$ of the neural network.

Therefore, in a further particularly advantageous embodiment, a confidence $C$ of the output $O$ of the neural network is determined. In response to this confidence $C$ meeting a predetermined condition, the number $n$ of terms used in subsequent computations of the approximate value $A$ of $e^x$ is modified. In this manner, high numbers $n$ of terms may be used only when really needed, and less processing capacity goes to "waste" on inputs for which the final result is clear very early into the processing already.

To this end, in particular, the number $n$ of terms is controlled to be kept at the lowest value that is sufficient to achieve a predetermined minimum confidence $C$ of the output $O$.

As discussed before, the lightweight approximation of $e^x$ presented here allows to downsize the hardware platform that is used to compute the output $O$ of the neural network. Therefore, in a further particularly advantageous embodiment, the neural network is implemented on a hardware platform with less memory, and/or less processing resources, than those which would be necessary to compute the output $O$ without approximating the value of $e^x$. This applies both in the quantitative and in the qualitative dimension. Quantitative means that, of hardware resources of which at least one instance needs to be present no matter whether the approximation presented here is used or not, fewer instances need to be present if the approximation is used. Qualitative means that, of certain types of circuitry that would be needed if the approximation was not used, no instances need to be present in the hardware platform by virtue of the approximation being used. This qualitative type of downsizing does not make the hardware platform slower, but it renders the hardware platform incapable of doing certain things altogether, like multiplication or division.

In a further particularly advantageous embodiment, the argument x is derived from measurement data acquired using at least one sensor. From the output 0 of the neural network, an actuation signal is computed. A vehicle, a driving assistance system, a robot, a quality inspection system, a surveillance system, and/or a medical imaging system, is actuated with the actuation signal. In this manner, the actuation signal can be determined faster, and the respective actuated technical system only requires a lesser-powered and/or lesser capable embedded system for processing the neural network.

The method may be wholly or partially computer-implemented and embodied in software. The invention therefore also relates to a computer program with machine-readable instructions that, when executed by one or more computers and/or compute instances, cause the one or more computers and/or compute instances to perform the method described above. Herein, control units for vehicles or robots and other embedded systems that are able to execute machine-readable instructions are to be regarded as computers as well. Compute instances comprise virtual machines, containers or other execution environments that permit execution of machine-readable instructions in a cloud.

A non-transitory storage medium, and/or a download product, may comprise the computer program. A download product is an electronic product that may be sold online and transferred over a network for immediate fulfilment. One or more computers and/or compute instances may be equipped with said computer program, and/or with said non-transitory storage medium and/or download product.

In the following, the invention will be described using Figures without any intention to limit the scope of the invention.

Description of the Figures

Figure 1: Exemplary embodiment of the method 100 for computing an approximate value $A$ of the exponential function $e^x$ of an argument x;

Figure 2: Illustration of the simplifications introduced by the approximation as per the method 100.

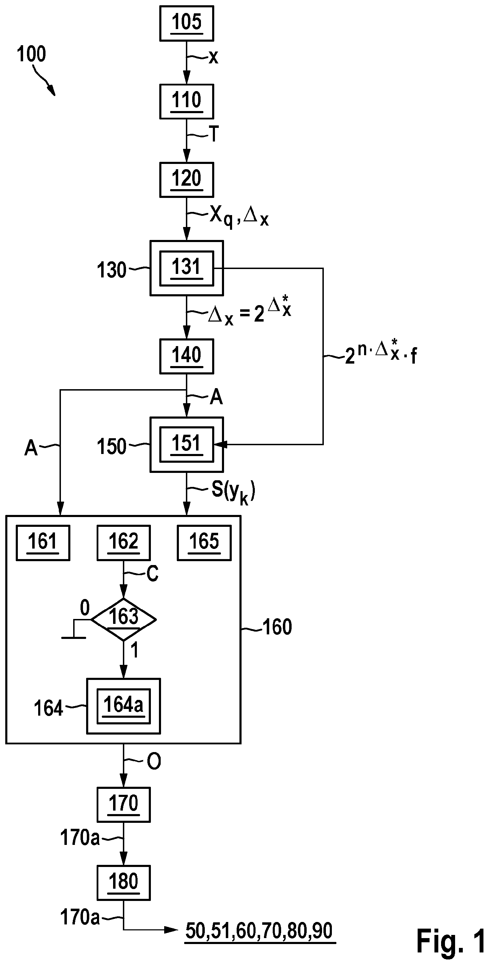

Figure 1 is a schematic flow chart of an embodiment of the method 100 for computing an approximate value $A$ of the exponential function $e^x$ of an argument $x$.

According to block 105, the argument $x$ may be derived from measurement data acquired using at least one sensor.

In step 110, $e^x$ is approximated with a Taylor expansion $T$ around $x = 0$ that comprises a predetermined number $n$ of terms with $i$-th powers $x^i$ of the argument $x$ divided by the respective factorial of $i$, with $i = 1, ..., n$.

In step 120, the argument $x$ is decomposed into a product of an integer $X_q$ and a non-integer scaling factor $\Delta_x$.

In step 130, this scaling factor $\Delta_x$ is expressed as a power of 2 with an exponent of $\Delta_x^*$, so that $\Delta_x = 2^{\Delta_x^*}$.

According to block 131, the sought approximation of $e^x = e^{\Delta x X q}$ may be decomposed into a product of $2^{n \cdot \Delta_x^*}$ and a remaining part $f$.

In step 140, in the computation of each term of the Taylor expansion T, the factorial of $i$ is approximated to the nearest power of 2, $p(i!)$. The computation of all terms of the Taylor expansion T yields the sought approximate value of $e^x$.

In step 150, the computed approximate value $A$ of $e^x$ is used in the computation of the softmax function

$$S(y_k) = \exp(y_k)/\sum_{l=1}^{m} \exp(y_l)$$

of an element $y_k$ of an input vector $y$ with $m$ elements.

According to block 151, if $A$ has been decomposed into $2^{n \cdot \Delta_x^*} \cdot f$ according to block 131, computations of two instances of $2^{n \cdot \Delta_x^*}$ that appear in the numerator and in the denominator of $S(y_k)$ may be omitted.

In step 160, the computed approximate value $A$ of $e^x$, and/or the computed value $S(y_k)$ of the softmax function, is used in the computation of the output $O$ of a neural network.

According to block 161, the computed approximate value $A$ of $e^x$, and/or the computed value $S(y_k)$ of the softmax function, may be used to compute the output $O$ of a classifier network for images or other records of measurement data, and/or the output $O$ of a multi-head attention module of a transformer network.

According to block 162, a confidence $C$ of the output $O$ of the neural network may be determined. It may then be determined in block 163 whether this confidence $C$ meets a predetermined condition, such as being above or below a predetermined threshold value. If this is the case (truth value 1), then, according to block 164, the number $n$ of terms used in subsequent computations of the approximate value $A$ of $e^x$ may be modified. In particular, according to block 164a, the number $n$ of terms may be controlled to be kept at the lowest value that is sufficient to achieve a predetermined minimum confidence $C$ of the output $O$.

According to block 165, the neural network may be implemented on a hardware platform with less memory, and/or less processing resources, than those which would be necessary to compute the output $O$ without approximating the value of $e^x$.

In step 170, an actuation signal 170a is determined from the output $O$ of the neural network.

In step 180, a vehicle 50, a driving assistance system 51, a robot 60, a quality inspection system 70, a surveillance system 80, and/or a medical imaging system 90, is actuated with the actuation signal 170a.

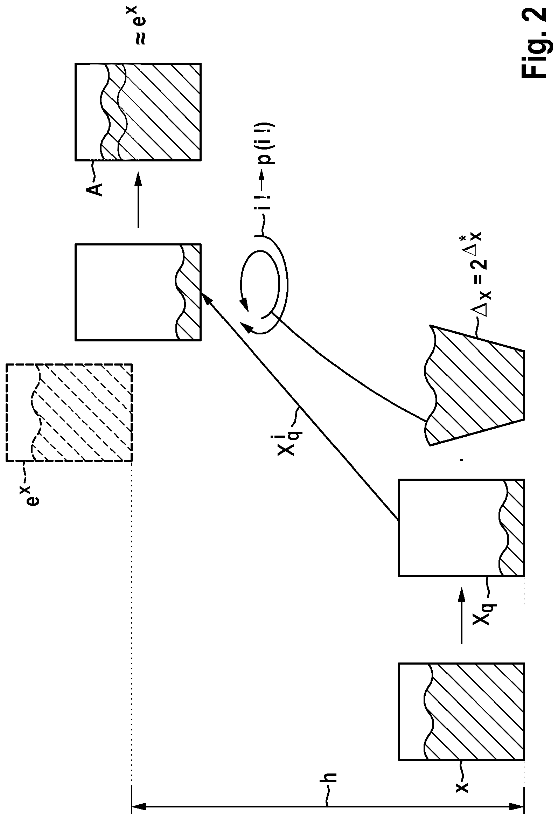

Figure 2 illustrates the simplifications introduced by the approximation as per the method 100.

The task of computing $e^x$ is sketched as lifting the argument $x$, drawn as a container filled with water, up a given height $h$. This is difficult because the water-filled container is heavy. The container can be lightened a lot by decomposing the argument x into an integer $X_q$, symbolized by a near-empty container, and a non-integer scaling factor $\Delta_x$. Computing

the $i$-th power $X_q^i$ of the integer $X_q$ corresponds to lifting the near-empty container up the given height $h$.

There are two more computations required in the approximation. A power of the scaling factor $\Delta_x$ has to be computed, and a division by the factorial $i!$ needs to be made. The scaling factor $\Delta_x$ is expressed as a power of 2 with an exponent of $\Delta_x^*$, so that $\Delta_x = 2^{\Delta_x^*}$. This reduces the multiplication with the scaling factor $\Delta_x$ or a power thereof to a simple bit-shift operation, symbolized in Figure 2 as an anticlockwise rotation of the lifted near-empty container. The factorial $i!$ is approximated to a nearest power of 2, $p(i!)$. This reduces division by the factorial $i!$ to a bit-shift operation in the other direction, symbolized by a clockwise rotation of the lifted near-empty container.

The end result is an approximation $A$ that is close but not identical to the true value of $e^x$. This is symbolized by the container $A$ not being at the full height h of $e^x$ and having a lesser fill level than the container $e^x$.

## Claims

1. A method (100) for computing an approximate value $A$ of the exponential function $e^x$ of an argument $x$, comprising the steps of:

   • approximating (110) $e^x$ with a Taylor expansion $T$ around $x = 0$ that comprises a predetermined number $n$ of terms with i-th powers $x^i$ of the argument $x$ divided by the respective factorial of $i$, with $i = 1, ..., n$; and
   • in the computation of each term, approximating (140) the factorial of $i$ to the nearest power of 2, $p(i!)$.

2. The method (100) of claim 1, further comprising:

   • decomposing (120) the argument $x$ into a product of an integer $X_q$ and a non-integer scaling factor $\Delta_x$; and

   • expressing (130) this scaling factor $\Delta_x$ as a power of 2 with an exponent of $\Delta_x^*$, so that $\Delta_x = 2^{\Delta_x^*}$.

3. The method (100) of claim 2, further comprising: decomposing (131) the sought approximation of $e^x = e^{\Delta_x X_q}$ into a product of $2^{n \cdot \Delta_x^*}$ and a remaining part $f$.

4. The method (100) of any one of claims 1 to 3, further comprising: using (150) the computed approximate value $A$ of $e^x$ in the computation of the softmax function $S(y_k) = \exp(y_k)/\sum_{l=1}^{m} \exp(y_l)$ of an element $y_k$ of an input vector $y$ with $m$ elements.

5. The method (100) of claims 3 and 4, wherein computations of two instances of $2^{n \cdot \Delta_x^*}$ that appear in the numerator and in the denominator of $S(y_k)$ are omitted (151).

6. The method (100) of any one of claims 1 to 5, wherein at least one multiplication of one number with a power of 2 to an exponent, and/or division of said number by said power of 2, is computed by bit-shifting the number for a number of bits corresponding to the exponent.

7. The method (100) of any one of claims 1 to 6, further comprising: using (160) the computed approximate value $A$ of $e^x$, and/or the computed value $S(y_k)$ of the softmax function, in the computation of the output 0 of a neural network.

8. The method (100) of claim 7, wherein the computed approximate value $A$ of $e^x$, and/or the computed value $S(y_k)$ of the softmax function, is used (161) to compute the output $O$ of a classifier network for images or other records of measurement data, and/or the output $O$ of a multi-head attention module of a transformer network.

9. The method (100) of any one of claims 7 or 8, further comprising:

   • determining (162) a confidence $C$ of the output $O$ of the neural network; and
   • in response to this confidence $C$ meeting a predetermined condition (163), modifying (164) the number $n$ of terms used in subsequent computations of the approximate value $A$ of $e^x$.

10. The method (100) of claim 9, wherein the number $n$ of terms is controlled (164a) to be kept at the lowest value that is sufficient to achieve a predetermined minimum confidence $C$ of the output $0$.

11. The method (100) of any one of claims 7 to 10, wherein the neural network is implemented (165) on a hardware platform with less memory, and/or less processing resources, than those which would be necessary to compute the output $O$ without approximating the value of $e^x$.

12. The method (100) of any one of claims 7 to 11, wherein the argument $x$ is derived (105) from measurement data acquired using at least one sensor, and wherein the method further comprises:

    • determining (170), from the output $O$ of the neural network, an actuation signal (170a); and
    • actuating (180) a vehicle (50), a driving assistance system (51), a robot (60), a quality inspection system (70), a surveillance system (80), and/or a medical imaging system (90), with the actuation signal (170a).

13. A computer program, comprising machine-readable instructions that, when executed by one or more computers and/or compute instances, cause the one or more computers and/or compute instances to perform the method (100) of any one of claims 1 to 12.

14. A non-transitory machine-readable storage medium, and/or a download product, with the computer program of claim 13.

15. One or more computers and/or compute instances with the computer program of claim 13, and/or with the non-transitory machine-readable storage medium and/or download product of claim 14.

**Amended claims in accordance with Rule 137(2) EPC.**

1. A computer-implemented method (100) for computing an approximate value $A$ of the exponential function $e^x$ of an argument $x$, comprising the steps of:

    • approximating (110) $e^x$ with a Taylor expansion $T$ around $x = 0$ that comprises a predetermined number $n$ of terms with i-th powers $x^i$ of the argument $x$ divided by the respective factorial of $i$, with $i = 1, ..., n$; and
    • in the computation of each term, approximating (140) the factorial of i to the nearest power of 2, $p(i!)$; and
    • using (160) the computed approximate value A of $e^x$, and/or the computed value $S(y_k)$ of the softmax function, in the computation of the output 0 of a neural network..

2. The method (100) of claim 1, further comprising:

    • decomposing (120) the argument $x$ into a product of an integer $X_q$ and a non-integer scaling factor $\Delta_x$; and

    • expressing (130) this scaling factor $\Delta_x$ as a power of 2 with an exponent of $\Delta_x^*$, so that $\Delta_x = 2^{\Delta_x^*}$.

3. The method (100) of claim 2, further comprising: decomposing (131) the approximation of $e^x = e^{\Delta_x X_q}$ into a product of $2^{n \cdot \Delta_x^*}$ and a remaining part $f$.

4. The method (100) of any one of claims 1 to 3, further comprising: using (150) the computed approximate value $A$ of $e^x$ in the computation of the softmax function $S(y_k) = \exp(y_k) / \sum_{l=1}^{m} \exp(y_l)$ of an element $y_k$ of an input vector $y$ with m elements.

5. The method (100) of claims 3 and 4, wherein computations of two instances of $2^{n \cdot \Delta_x^*}$ that appear in the numerator and in the denominator of $S(y_k)$ are omitted (151).

6. The method (100) of any one of claims 1 to 5, wherein at least one multiplication of one number with a power of 2 to an exponent, and/or division of said number by said power of 2, is computed by bit-shifting the number for a number of bits corresponding to the exponent.

7. The method (100) of any one of claims 1 to 6, wherein the computed approximate value $A$ of $e^x$, and/or the computed value $S(y_k)$ of the softmax function, is used (161) to compute the output $O$ of a classifier network for images or other records of measurement data, and/or the output $O$ of a multi-head attention module of a transformer network.

8. The method (100) of any one of claims 1 to 7, further comprising:

   • determining (162) a confidence $C$ of the output $O$ of the neural network; and
   • in response to this confidence $C$ meeting a predetermined condition (163), modifying (164) the number $n$ of terms used in subsequent computations of the approximate value $A$ of $e^x$.

9. The method (100) of claim 8, wherein the number $n$ of terms is controlled (164a) to be kept at the lowest value that is sufficient to achieve a predetermined minimum confidence $C$ of the output $O$.

10. The method (100) of any one of claims 1 to 9, wherein the neural network is implemented (165) on a hardware platform with less memory, and/or less processing resources, than those which would be necessary to compute the output $O$ without approximating the value of $e^x$.

11. The method (100) of any one of claims 1 to 10, wherein the argument x is derived (105) from measurement data acquired using at least one sensor, and wherein the method further comprises:

   • determining (170), from the output $O$ of the neural network, an actuation signal (170a); and
   • actuating (180) a vehicle (50), a driving assistance system (51), a robot (60), a quality inspection system (70), a surveillance system (80), and/or a medical imaging system (90), with the actuation signal (170a).

12. A computer program, comprising machine-readable instructions that, when executed by one or more computers and/or compute instances, cause the one or more computers and/or compute instances to perform the method (100) of any one of claims 1 to 11.

13. A non-transitory machine-readable storage medium, and/or a download product, with the computer program of claim 12.

14. One or more computers and/or compute instances with the computer program of claim 12, and/or with the non-transitory machine-readable storage medium and/or download product of claim 13.

Fig. 1

Fig. 2

Europäisches
Patentamt

European
Patent Office

Office européen
des brevets

# EUROPEAN SEARCH REPORT

**Application Number**

EP 24 17 8765

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2010/198894 A1 (AZADET KAMERAN [US] ET AL) 5 August 2010 (2010-08-05) <br> * paragraph [0020] - paragraph [0029] * <br> ----- | 1-15 | INV. <br> G06F7/556 |
| Y | SUPRIYA AGGARWAL ET AL: "Area-Time Efficient Scaling-Free CORDIC Using Generalized Micro-Rotation Selection", IEEE TRANSACTIONS ON VERY LARGE SCALE INTEGRATION (VLSI) SYSTEMS, IEEE SERVICE CENTER, PISCATAWAY, NJ, USA, vol. 20, no. 8, 1 August 2012 (2012-08-01) , pages 1542-1546, XP011447776, ISSN: 1063-8210, DOI: 10.1109/TVLSI.2011.2158459 <br> * Section III.A * <br> ----- | 1-15 | |
| A | US 2023/351181 A1 (CHEEMA UMER IFTIKHAR [US] ET AL) 2 November 2023 (2023-11-02) <br> * paragraph [0045] * <br> * paragraph [0058] - paragraph [0060] * <br> ----- | 1-15 | |

**TECHNICAL FIELDS SEARCHED (IPC)**

G06F
G06N

The present search report has been drawn up for all claims

| Place of search | Date of completion of the search | Examiner |
|---|---|---|
| Munich | 11 November 2024 | Tenbieg, Christoph |

EPO FORM 1503 03.82 (P04C01)

## ANNEX TO THE EUROPEAN SEARCH REPORT
## ON EUROPEAN PATENT APPLICATION NO.

EP 24 17 8765

This annex lists the patent family members relating to the patent documents cited in the above-mentioned European search report.
The members are as contained in the European Patent Office EDP file on
The European Patent Office is in no way liable for these particulars which are merely given for the purpose of information.

11-11-2024

| Patent document cited in search report | Publication date | Patent family member(s) | Publication date |
|---|---|---|---|
| US 2010198894 A1 | 05-08-2010 | NONE | |
| US 2023351181 A1 | 02-11-2023 | NONE | |

EPO FORM P0459

For more details about this annex : see Official Journal of the European Patent Office, No. 12/82